# EUROPEAN PATENT SPECIFICATION

(11) **EP 2 944 884 B1**
(45) Date of publication and mention of the grant of the patent: **04.05.2016**
(21) Application number: 14168337.5
(22) Date of filing: 14.05.2014
(51) Int. Cl.: F24D 3/10

(54) **Three-way ball valve**
Drei-Wege-Kugel Ventil
SOUPAPE À BILLE À TROIS VOIES

(43) Date of publication of application: 18.11.2015
(73) Proprietor: Airaga Rubinetterie S.P.A., 28024 Gozzano (IT)
(72) Inventor: Milani, Andrea, 28024 Gozzano (IT)
(74) Representative: Siniscalco, Fabio

(56) References cited:
- EP-A1- 0 292 814
- EP-A1- 1 333 218
- DE-B1- 2 401 459
- DE-U1-202005 020 183
- GB-A- 2 233 739
- US-A- 5 944 055

## Description

### BACKGROUND OF THE INVENTION

The object of this invention is a three-way ball valve for filling circuits of boilers, in particular wall boilers.

### PRIOR ART

Gas wall boilers for heating and producing domestic hot water are known that are used in particular in blocks of flats and single dwelling units with independent heating.

Such boilers have two heat exchangers that receive thermal energy from the burner of the boiler, i.e. a main heat exchanger connected to the various radiators installed in the flat, and a further heat exchanger connected to the various sanitary appliances installed in the flat. Such boilers further incorporate a filling circuit that has the function of enabling water coming from the mains water supply to be loaded during the step of filling or topping up the heating circuit.

Once filling has been completed, the connection between the mains water supply and the heating circuit has to be interrupted so as to prevent the water coming from the heating circuit being able to pollute the water of the mains water supply in the event of a return flow due to a vacuum in the mains water supply.

For the opening and closing operation, the filling circuit has two T-shaped three-way ball valves and two ball shut-off valves. One of the two three-way ball valves opens in a first position the connection between the mains water supply and heating circuit to fill or top up the latter and closes the connection between the mains water supply and the boiler, whereas in a second position it closes the connection between the mains water supply and the heating circuit and opens the connection between the mains water supply and the boiler to produce domestic hot water. The other three-way ball valve opens in a first position the connection between the previous three-way ball valve and the heating circuit to fill or top up the latter when the previous ball valve is in the first position and closes the connection between the heating circuit and the boiler, whereas in a second position it closes the connection between the previous three-way ball valve and the heating circuit and opens the connection between the heating circuit and the boiler.

The two shut-off ball valves sealingly interrupt the connection between the two three-way ball valves when there is no need to fill or top up the heating circuit and the boiler performs its normal functions of heating and producing domestic hot water.

The presence of shut-off valves in the boilers is indispensable for securely interrupting the filling circuit, but represents a cost and a complication both from a structural point of view and from a functional point of view.

Further, these shut-off valves occupy space and thus affect the dimensions and weight of the boiler, which in particular should be reduced in a wall boiler for flats. Further, such valves also affect the cost of the boiler.

US5944055 shows a three-way ball valve according to the features of the preamble of claim 1.

### OBJECTS OF THE INVENTION

One object of the present invention is to propose a three-way ball valve that enables the aforesaid shut-off valves to be eliminated.

A further object of the present invention is for such a three-way ball valve to enable a connection geometry to the pipes corresponding substantially to the connection geometry of the prior-art T-shaped valves.

Another object of the present invention is that such three-way ball valve has a simple, cheap and compact structure.

### SHORT DESCRIPTION OF THE INVENTION

This object is achieved by means of a three-way ball valve according to what is claimed in claim 1.

### SHORT DESCRIPTION OF THE DRAWINGS

In order to better understand the invention, an embodiment thereof is disclosed below by way of non-limiting example illustrated in the attached drawings in which:
fig. 1 is a side view of a three-way ball valve according to the invention;
fig. 2 is a top view of the valve in fig. 1;
fig. 3 is a longitudinal section of the valve in fig.1;
fig. 4 is a cross section according to the line IV-IV of fig. 3 of the valve in fig.1;
fig. 5 is a perspective view of an enlarged detail of the valve in fig. 1;
figs. 6, 7 show in a longitudinal section the operation of the valve in fig. 1;
figs. 8, 9 show in a perspective view the operation of the valve in fig.1;
fig. 10 is a perspective view of a filling circuit of boilers using the valve in fig.1;
fig. 11 is a perspective view of a filling circuit of boilers using two valves in fig.1.

### DETAILED DESCRIPTION OF THE INVENTION

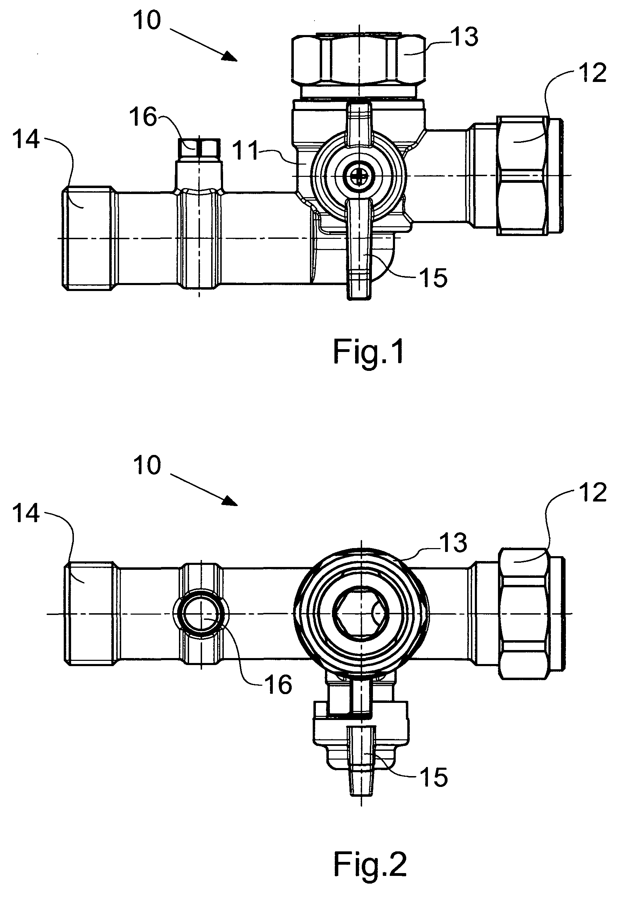

The three-way ball valve illustrated in figs 1, 2, indicated generically by 10, comprises a valve body 11 consisting of two parts joined together.

Externally, the valve 10 has three threaded connections 12, 13, 14 for connecting to hydraulic piping.

Externally, the valve 10 also has a control lever 15 of the valve and a cap 16 for inspecting the valve internally.

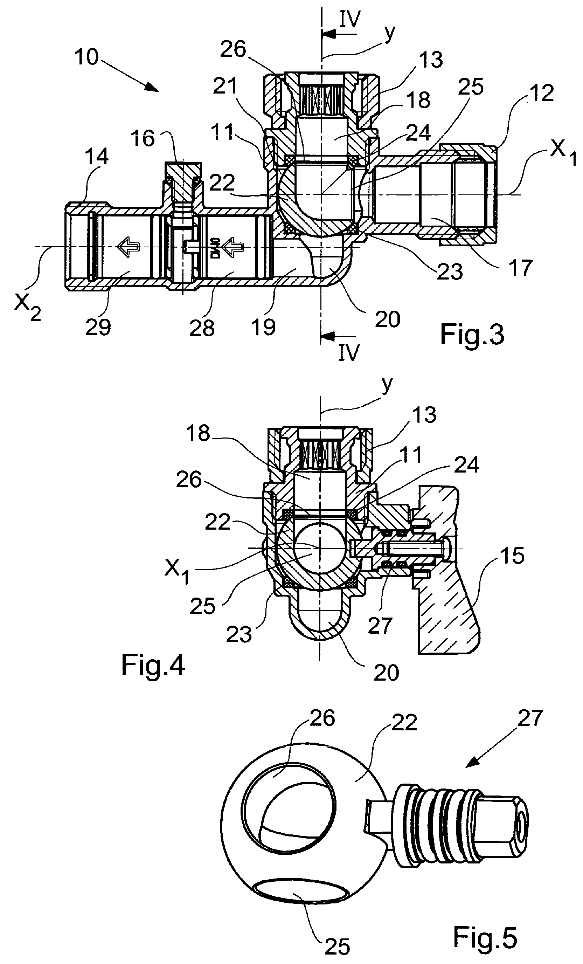

With reference to figs 3, 4, conduits are obtained inside the valve 10.

At the fitting 12 a longitudinal inlet conduit 17 is obtained that extends along an axis X1.

At the fitting 13 a first transverse outlet conduit 18 is obtained that extends along an axis Y.

At the fitting 14 a second longitudinal outlet conduit 19 is obtained that extends along an axis X2 parallel and axially offset with respect to the axis X1. This second outlet conduit 19 is connected to the inlet conduit 17 and to the first outlet conduit 18 through a 90° joint 20.

Inside the body 11 of the valve 10, between the conduits 17, 18, 19, a seat 21 is obtained in which a ball plug 22 is housed that intercepts the fluid that flows inside the valve. This ball plug 22 can rotate 90° inside the seat 21 and is actuated by the external control lever 15. At the mouth of the conduit 18 and at the mouth of the joint 20, in an opposite position, in the seat 21 two annular sealing gaskets 23 and 24 are mounted that interact with the surface of the ball plug 22.

In fig. 5 the plug 22 is shown in detail. The ball plug 22 is internally hollow and has two circular openings 25 and 26 with axes arranged at 90° in relation to one another. A stem 27 is provided that connects the ball plug 22 to the external control lever 15.

With reference to fig. 3, inside the conduit 19 two non-return valve cartridges 28 and 29 are mounted in succession that enable fluid in the conduit 19 to exit only, as indicated by the arrows.

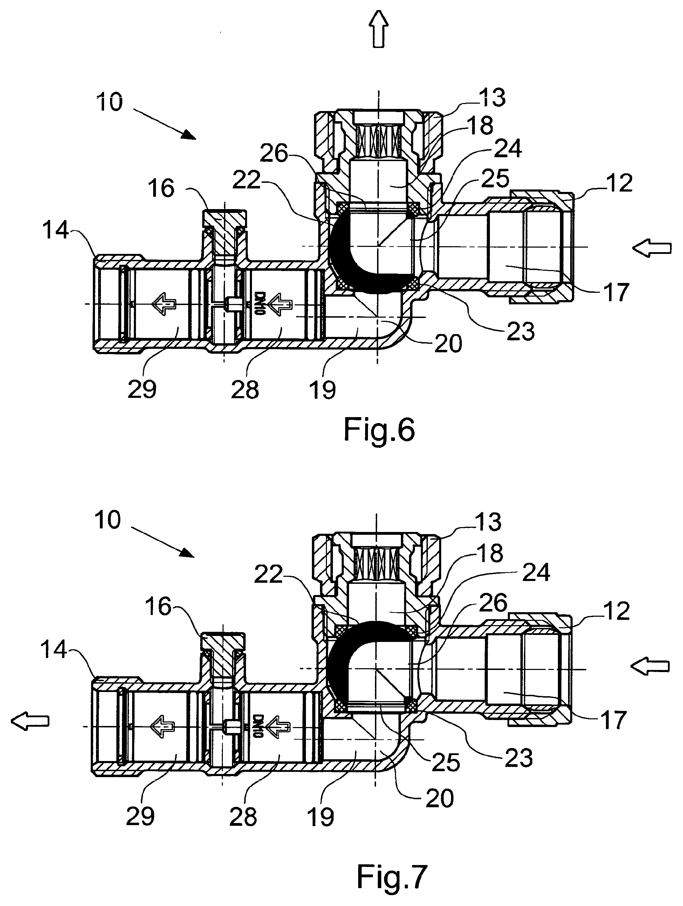

In figs 6,7,8,9 the operation of the valve 10 is shown.

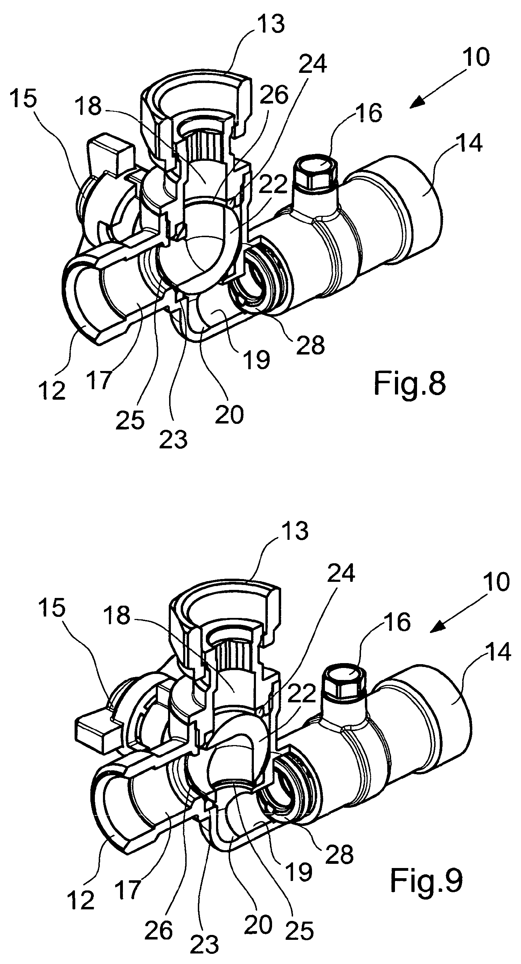

In a first operating position of the ball plug 22, illustrated in figs. 6, 8, the fluid enters the valve 10 through the conduit 17, passes through the hollow plug 22 by entering through the opening 25 and exiting through the opening 26, and exits the valve by travelling through the conduit 18, as indicated by the arrows.

In a second operating position of the ball plug 22 rotated by 90° with respect to the previous, illustrated in figs. 7, 9, the fluid enters the valve 10 through the conduit 17, passes through the hollow plug 22, entering through the opening 26 and exiting through the opening 25, and exits the valve by travelling this time through the joint 20 and the conduit 19, as indicated by the arrows.

In the first operating position of the ball plug 22 of figs. 6, 8 the gasket 23 acting on the surface of the plug 22 ensures a perfect seal in one section of the valve preventing any leakage of fluid from and to the conduit 19.

In the second operating position of the ball plug 22 of figs. 7, 9 the other gasket 24 acting on the surface of the plug 22 ensures the perfect seal in another section of the valve preventing any leak of fluid from and to the conduit 18.

The non-return valve cartridges 28, 29 permit a flow of fluid through the conduit 19 only to the fitting 14 of the valve 10. Removing the cap 16, it is possible to inspect the inside of the conduit 19.

The three-way ball valve 10 disclosed and illustrated is advantageously applicable to the boiler-filling circuits, in particular of wall boilers, as will be seen below.

Such valve 10 enables the shut-off valves to be eliminated that are used in known filling circuits.

The valve 10 further permits a connecting geometry to the piping substantially corresponding to that of the T-shaped valves of the prior art so as not to require geometrical modifications to the boiler.

Lastly, the valve 10 has a simple, cheap and compact structure.

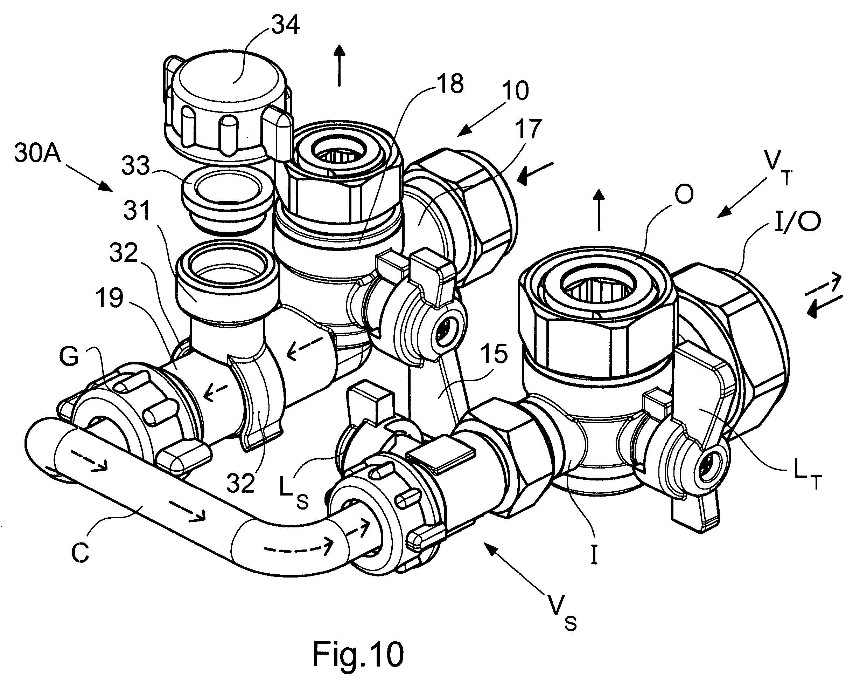

In fig. 10 there is shown a first application of the valve 10 to a filling circuit of a wall boiler, indicated generically by 30A.

In this filling circuit a three-way ball valve 10, a common T-shaped three-way ball valve, indicated as VT, and a common shut-off valve, indicated as VS, are used. The three-way valve VT is driven by a control lever indicated by LT, the shut-off valve VS is driven by a control lever indicated by LS.

The second outlet conduit 19 of the valve 10 is connected to the shut-off valve VS by a joint conduit C, and the shut-off valve VS is connected directly to an inlet of the three-way valve VT indicated by I.

The general configuration of the filling circuit 30A is substantially U-shaped.

The inlet conduit 17 of the valve 10 is intended to be connected to the mains water supply. The first outlet conduit 18 of the valve 10 is intended to be connected to the boiler.

An inlet/outlet, indicated by I/O, of the three-way valve VT is intended to be connected to the heating circuit, whereas an outlet, indicated by O, of the three-way valve VT is intended to be connected to the boiler.

During normal operation of the plant, or when filling or topping up of the plant is not required, the levers 15, LT and LS respectively of the valves 10, VT, and VS are in the position of fig. 10. In this case in the valve 10 the fluid coming from the mains water supply flows and goes to the boiler for producing domestic hot water: the fluid enters the inlet conduit 17 and exits the outlet conduit 18, as indicated by the arrows. In the valve VT the fluid flows that travels through the boiler and the heating circuit: the fluid enters the inlet/outlet I/O and exits the outlet O, as indicated by the arrows. The shut-off valve VS is sealingly closed in such a manner as to prevent a leak of fluid from and to the conduit C. On the other side the valve 10 also has a shutting-off function, as in the illustrated position any leak of fluid from and to the conduit 19 is prevented. In this manner the heating circuit and the domestic hot-water production circuit are perfectly isolated from one another.

Owing to the valve 10 a single shut-off valve is used, i.e. the valve VS, instead of two shut-off valves as in the prior art where in the filling circuit two common three-way T-shaped ball valves are used. This saving of a shut-off valve is obtained with a valve, i.e. the valve 10, which has a configuration that is very similar to a T-shaped valve. This translates into greater compactness of the filling circuit 30A compared with known filling circuits.

If filling or topping up the heating circuit with water coming from the mains water supply is required, the knob 15 of the valve 10, the knob LT of the valve VT and the knob LS of the valve VS are moved to the other position. In this case, as indicated by the dashed arrows, the water coming from the mains water supply travels through the valve 10 along the conduits 17,19, travels through the joint conduit C, travels through the valve VS and then the valve VT through the inlet I and the inlet/outlet I/O, and then moves to the heating circuit. The valves 10 and VT ensure insulation of the filling circuit with respect to the boiler.

It is also possible to open the connection between the valve 10 and the valve VT by loosening a ring nut G so as to separate the joint conduit C from the conduit 19 of the valve 10.

On the filling circuit 30A there are closing elements for closing the ends of the conduit C and the conduit 19 in the event of the connection between them opening. In particular, a first threaded cap 31 is provided with a half ring 32 for snap-fitting of the cap 31 to the conduit 19 of the valve 10. Into the cap 31 an annular gasket 33 is inserted. A further cap 34 is tightened on the cap 31 such that the gasket 33 is interposed between the cap 31 and the cap 34. To close the aforesaid open ends, the cap 31 is removed from the conduit 19, the cap 34 is unscrewed and removed from the cap 31; the cap 34 is used to close the end of the conduit 19, whereas the cap 31 with the gasket 33 are used to close the end of the conduit C.

The aforesaid system of closure is very simple and practical. This closure system can be made of plastics to also make it cheap.

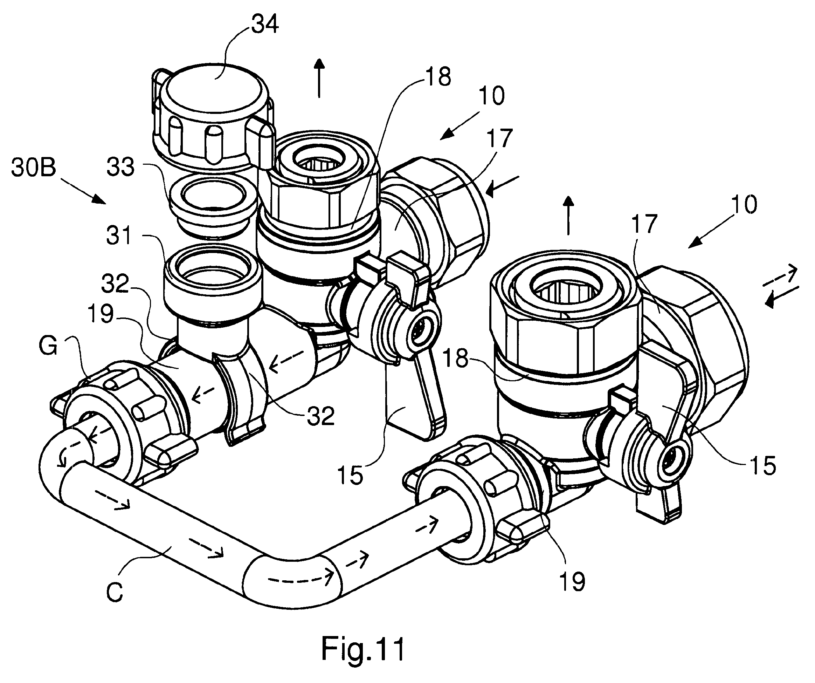

In fig. 11 a second filling circuit is illustrated, indicated generically by 30B, in which two valves 10 are used, so as to completely avoid the use of shut-off valves. The second valve 10, i.e. the valve on the right in fig. 11, has a shorter conduit 19 because in this valve non-return valve cartridges are not used because for retention the valve cartridges in the left valve are sufficient. The operation of the filling circuit 30B is similar to that already seen in the circuit 30A. The filling circuit 30B is clearly even simpler and more compact than the circuit 30A.

It is clear that variations on and/or additions to what has been disclosed and illustrated above can be provided.

The shape of the valve and of the components thereof can undergo variations according to need.

Also the configuration of the filling circuits can vary according to need.

This also applies to the configuration of the closing elements of the filling circuit.

## Claims

1. Three-way ball valve (10) for boiler-filling circuits, in particular of wall boilers, comprising a body (11) in which a first, a second and a third conduit (17,18,19) are obtained that are connected to three respective fittings of the valve (12,13,14), and in which a ball plug (22) is housed that is movable between a first position in which the first and the second conduit (17,18) are put in connection and in which the third conduit (19) is excluded and a second position in which the first and the third conduit (17,19) are connected and the second conduit is excluded (18), wherein the first and the second conduit (17,18) are arranged in a position substantially perpendicular to one another and the first and third conduit (17,19) are arranged in a position substantially parallel one another, wherein opposing sealing means (23,24) is provided that acts on the ball plug (22) and ensures the seal in the direction between the first and the third conduit (17,19) preventing any leakage of fluid from and to the third conduit (19) when the ball plug (22) is in said first position and in the direction between the first and the second conduit (17,18) preventing any leakage of fluid from and to the second conduit (18) when the ball plug (22) is in said second position, **characterized in that** the first and third conduit (17,19) are arranged axially offset one another, wherein between the first and the third conduit (17, 19) a substantially 90° joint is provided, wherein the sealing means comprises two opposite annular sealing gaskets (23, 24) arranged respectively at the mouth of the second conduit (18) and at the mouth of the joint (20), that are suitable for interacting with the surface of the ball plug (22), and wherein the ball plug (22) is internally hollow and has two circular openings (25,26) with axes arranged at 90° to one another for the passage of fluid through the plug (22).

2. Valve according to claim 1, wherein along the third conduit (19) at least one non-return valve cartridge (28; 29) is arranged.

3. Filling circuit (30A) of a boiler connectable to a heating circuit and to a circuit for producing domestic hot water, comprising a three-way ball valve (10) according to claim 1 or 2, connectable to the circuit for producing hot water and a T-shaped three-way valve (VT) connectable to the heating circuit, in which the two valves (10,VT) are connected together for the function of filling or topping up the heating circuit, and wherein the connection between the two valves (10,VT) is shut off by a shut-off valve (VS).

4. Filling circuit (30B) of a boiler connectable to a heating circuit and to a circuit for producing domestic hot water, comprising two three-way ball valves (10) according to claim 1 or 2, connectable respectively to the heating circuit and to the circuit for producing hot water, in which the two valves (10) are connected together for the function of filling or topping up the heating circuit.

5. Filling circuit according to claim 3 or 4, comprising closing elements (31,34) provided with snap-fitting means (32) for fitting to the circuit conduits and intended for closing free ends of the conduits (C,19) in case of opening of the filling circuit.

6. Filling circuit according to claim 5, in which the closing elements comprise a first cap (31) provided with a half ring (32) for snap-fitting of the cap (31) to a conduit of the circuit, a gasket (33) inserted into the first cap (31), and a second cap (34) coupled with the first cap (31) such that the gasket (33) is interposed between the first and the second cap (31, 34).

## Patentansprüche

1. Drei-Wege-Kugelventil (10) für Erhitzerfüllkreisläufe, insbesondere von Wandkesseln, umfassend einen Körper (11), in welchem eine erste, eine zweite und eine dritte Leitung (17, 18, 19) erhalten sind, die mit drei entsprechenden Passungen des Ventils (12, 13, 14) verbunden sind, und in welchem ein Kugelhahn (22) untergebracht ist, der zwischen einer ersten Position, in welcher die erste und die zweite Leitung (17, 18) in Verbindung gesetzt sind und in welcher die dritte Leitung (19) ausgeschlossen ist, und einer zweiten Position, in welcher die erste und die dritte Leitung (17, 19) verbunden sind und die zweite Leitung ausgeschlossen ist (18), bewegbar ist, wobei die erste und die zweite Leitung (17, 18) in einer Position im Wesentlichen rechtwinklig zu einander angeordnet sind und die erste und dritte Leitung (17, 19) in einer Position im Wesentlichen parallel zu einander angeordnet sind, wobei sich gegenüberliegende Dichtungseinrichtungen (23, 24) bereitgestellt sind, die auf den Kugelhahn (22) wirken und die Dichtung in der Richtung zwischen der ersten und der dritten Leitung (17, 19) sichern, wodurch jedwede Fluidleckage von und zu der dritten Leitung (19) verhindert wird, wenn der Kugelhahn (22) in der genannten ersten Position ist, und in der Richtung zwischen der ersten und der zweiten Leitung (17, 18) jedwede Fluidleckage von und zu der zweiten Leitung (18) verhindert wird, wenn der Kugelhahn (22) in der genannten zweiten Position ist,
**dadurch gekennzeichnet dass**
die erste und dritte Leitung (17, 19) axial versetzt zu einander angeordnet sind, wobei zwischen der ersten und der dritten Leitung (17, 19) eine Verbindung von im Wesentlichen 90° hergestellt ist, wobei die Dichtungseinrichtungen zwei gegenüberliegende, ringförmige Dichtungsringe (23, 24) umfassen, die jeweils an der Mündung der zweiten Leitung (18) und an der Mündung der Verbindung (20) angeordnet sind und die geeignet sind, um mit der Oberfläche des Kugelhahns (22) zusammenzuwirken, und wobei der Kugelhahn (22) innen hohl ist und zwei kreisförmige Öffnungen (25, 26) hat, mit Achsen, die um 90° zu einander angeordnet sind, für den Durchlass von Fluid durch den Hahn (22).

2. Ventil nach Anspruch 1, wobei entlang der dritten Leitung (19) mindestens eine Rückschlagventilpatrone (28; 29) angeordnet ist.

3. Füllkreislauf (30A) für einen mit einem Heizkreislauf und einem Kreislauf zum Herstellen von häuslichem Warmwasser verbindbaren Erhitzer, umfassend ein mit dem Kreislauf zum Herstellen von Warmwasser verbindbares Drei-Wege-Kugelventil (10) nach Anspruch 1 oder 2, und ein mit dem Heizkreislauf verbindbares T-förmiges Drei-Wege-Ventil (VT), in welchem die zwei Ventile (10, VT) zum Zwecke des Füllens oder Aufstockens des Heizkreislaufs miteinander verbunden sind, und wobei die Verbindung zwischen den zwei Ventilen (10, VT) mit einem Absperrventil (VS) gesperrt wird.

4. Füllkreislauf (30B) für einen mit einem Heizkreislauf und einem Kreislauf zum Herstellen von häuslichem Warmwasser verbindbaren Erhitzer, umfassend zwei jeweils mit dem Heizkreislauf und mit dem Kreislauf zum Herstellen von Warmwasser verbindbare Drei-Wege-Kugelventile (10) nach Anspruch 1 oder 2, in welchem die zwei Ventile (10) zum Zwecke des Füllens oder Aufstockens des Heizkreislaufs miteinander verbunden sind.

5. Füllkreislauf nach Anspruch 3 oder 4, umfassend Schließelemente (31, 34), die mit Schnapppassungsvorrichtungen (32) ausgerüstet sind, um auf die Kreislaufleitungen zu passen und die dafür vorgesehen sind, freie Enden der Leitungen (C, 19) im Falle des Öffnens der Füllkreislaufs zu schließen.

6. Füllkreislauf nach Anspruch 5, in welchem die Schließelemente einen ersten Aufsatz (31), der mit einem Halbring (32) zum Schnapppassen der Aufsatzes (31) auf eine Leitung des Kreises ausgerüstet ist, einen in den ersten Aufsatz (31) eingesetzten Ring (33), und einen zweiten Aufsatz (34) umfassen, welcher derart mit dem ersten Aufsatz (31) gekoppelt ist, dass der Ring (33) sich zwischen dem ersten und dem zweiten Aufsatz (31, 34) befindet.

## Revendications

1. Soupape à bille à trois voies (10) pour circuit de remplissage de chaudières, en particulier pour chaudières murales, comprenant un corps (11) dans lequel se trouvent un premier, un deuxième et un troisième conduit (17, 18, 19) qui sont raccordés à trois garnitures respectives (12, 13, 14) de la soupape et dans lequel est logé un obturateur à bille (22) qui est mobile entre une première position, dans laquelle le premier et le deuxième conduit (17, 18) sont raccordés et dans lequel le troisième conduit (19) est exclu, et une seconde position, dans laquelle le premier et le troisième conduit (17,19) sont raccordés et le deuxième conduit (18) est exclu, dans laquelle le premier et le deuxième conduit (17, 18) sont aménagés dans une position où ils sont sensiblement perpendiculaires l'un à l'autre et le premier et le troisième conduit (17, 19) sont aménagés dans une position où ils sont sensiblement parallèles l'un à l'autre, dans laquelle il est prévu des moyens d'étanchéité opposés (23, 24) qui agissent sur l'obturateur à bille (22) et assurent l'étanchéité dans la direction comprise entre le premier et le troisième conduit (17, 19) en empêchant toute fuite de fluide du troisième conduit (19) et vers celui-ci lorsque l'obturateur à bille (22) se trouve dans ladite première position et dans la direction comprise entre le premier et le deuxième conduit (17, 18) en empêchant toute fuite de fluide du deuxième conduit (18) et vers celui-ci lorsque l'obturateur à bille (22) se trouve dans ladite seconde position, **caractérisée en ce que** le premier et le troisième conduit (17, 19) sont aménagés axialement décalés l'un de l'autre, dans laquelle il est prévu entre le premier et le troisième conduit (17,19) une articulation sensiblement à 90°, dans lequel les moyens d'étanchéité comprennent deux joints d'étanchéité annulaires opposés (23, 24) aménagés respectivement à l'ouverture du deuxième conduit (18) et à l'ouverture de l'articulation (20), qui conviennent pour interagir avec la surface de l'obturateur à bille (22) et dans laquelle l'obturateur à bille (22) est intérieurement creux et présente deux ouvertures circulaires (25, 26) avec des axes aménagés à 90° l'un de l'autre pour le passage du fluide à travers l'obturateur (22).

2. Soupape selon la revendication 1, dans laquelle est aménagée le long du troisième conduit (19) au moins une cartouche de soupape de non-retour (28 ; 29).

3. Circuit de remplissage (30A) d'une chaudière raccordable à un circuit de chauffage et à un circuit de production d'eau chaude domestique, comprenant une soupape à bille à trois voies (10) selon la revendication 1 ou la revendication 2 raccordable au circuit de production d'eau chaude et une soupape à trois voies en forme de T (VT) raccordable au circuit de chauffage, dans lequel les deux soupapes (10, VT) sont raccordées l'une à l'autre pour procéder au remplissage ou l'approvisionnement du circuit de chauffage et dans lequel le raccordement entre les deux soupapes (10, VT) est coupé par une soupape d'arrêt (VS).

4. Circuit de remplissage (30B) d'une chaudière raccordable à un circuit de chauffage et à un circuit de production d'eau chaude domestique, comprenant deux soupapes à bille à trois voies (10) selon la revendication 1 ou la revendication 2, raccordables respectivement au circuit de chauffage et au circuit de production d'eau chaude, dans lequel les deux soupapes (10) sont raccordées l'une à l'autre afin de procéder au remplissage ou à l'approvisionnement du circuit de chauffage.

5. Circuit de remplissage selon la revendication 3 ou la revendication 4, comprenant des éléments de fermeture (31, 34) pourvus de moyens d'ajustement instantané (32) pour ajuster sur les conduits des circuits et qui sont destinés à fermer les extrémités libres des conduits (C, 19) dans le cas de l'ouverture du circuit de remplissage.

6. Circuit de remplissage selon la revendication 5, dans lequel les éléments de fermeture comprennent un premier chapeau (31) pourvu d'une demi-bague (32) pour l'ajustement instantané du chapeau (31) à un conduit du circuit, un joint étanche (33) inséré dans le premier chapeau (31) et un second chapeau (34) couplé au premier chapeau (31) de sorte que le joint étanche (33) soit intercalé entre le premier et le second chapeau (31, 34).
